# EUROPÄISCHE PATENTSCHRIFT

(11) **EP 3 381 103 B1**
(45) Veröffentlichungstag und Bekanntmachung des Hinweises auf die Patenterteilung: **24.02.2021**
(21) Anmeldenummer: 16808908.4
(22) Anmeldetag: 27.10.2016
(51) Int. Cl.: H02J 3/32, B23K 9/10

(54) **ENERGIEVERSORGUNGSSYSTEM FÜR EINE MOBILE WIDERSTANDSSCHWEISSMASCHINE**
POWER SUPPLY SYSTEM FOR A MOBILE RESISTANCE WELDING MACHINE
SYSTÈME D'ALIMENTATION EN ÉNERGIE POUR UNE MACHINE DE SOUDAGE PAR RÉSISTANCE

(30) Priorität: 27.11.2015 AT 7672015
(43) Veröffentlichungstag der Anmeldung: 03.10.2018
(73) Patentinhaber: Plasser & Theurer Export von Bahnbaumaschinen Gesellschaft m.b.H., 1010 Wien (AT)
(72) Erfinder: STEINER, Ronald, 3203 Rabenstein an der Pielach (AT)
(86) Internationale Anmeldenummer: PCT/EP2016/001789
(87) Internationale Veröffentlichungsnummer: WO 2017/088946

(56) Entgegenhaltungen:
- DE-A1- 2 804 727
- DE-A1- 19 953 238
- DE-A1-102013 014 666
- JP-A- 2006 026 679
- US-A1- 2012 074 116

## Beschreibung

### Gebiet der Technik

Die Erfindung betrifft ein Energieversorgungsystem für eine mobile Widerstandsschweißmaschine zum Abbrennstumpfschweißen von Gleisschienen, welches einen mit einem Generator gekoppelten Verbrennungsmotor sowie eine Ladeeinrichtung zum Aufladen eines Energiespeichers umfasst, wobei der Energiespeicher ein Pufferelement eines Zwischenkreises ist, an den ein Schweißinverter angeschlossen ist.

### Stand der Technik

Ein einfaches Energieversorgungssystem für eine mobile Widerstandsschweißmaschine zum Abbrennstumpfschweißen von Gleisschienen ist aus der EP 0 461 575 A2 bekannt. Dabei wird elektrische Energie zur Versorgung eines Schweißinverters mittels eines in der Schweißmaschine angeordneten Generators bereitgestellt. Bekanntermaßen umfasst ein Aggregat zum Abbrennstumpfschweißen zwei Aggregatblöcke mit einem jeweiligen Klemm- und Schweißbackenpaar. Diese Aggregatblöcke sind in Schienenlängsrichtung mittels Hydraulikzylinder zueinander verschiebbar. Zum Aktivieren der Hydraulikzylinder ist deshalb eine in der Schweißmaschine angeordnete Hydraulikpumpe vorgesehen.

Um den Leistungsbedarf einer mobilen Widerstandsschweißmaschine zu reduzieren, ist in der DE 28 04 727 A1 ein gattungsgemäßes Energieversorgungssystem mit einem Akkumulator beschrieben. Dieser Akkumulator wird während einer Schweißpause aufgeladen und deckt die Energiespitzen während eines Schweißvorgangs ab. Damit ist ein kleineres Dieselstromaggregat nutzbar, weil dieses die erforderliche Schweißenergie nicht unmittelbar während eines Schweißvorgangs bereitstellen muss. Aus der JP 2006 026679 A ist ein Energieversorgungssystem bekannt, das an Ausgangskontakten einen Gleichstrom zum Betreiben eines Schweißgerätes liefert. Als Gleichstromquellen dienen einerseits ein Generator und andererseits eine Batterie. Dabei ist die Batterie in einem Zwischenkreis mittels des Generators oder mittels eines externen Versorgungsnetzes aufladbar.
In der US 2012/074116 A1 versorgt ein Generator über einen Gleichrichter einen Zwischenkreis mit einer Batterie als Pufferelement. An den Zwischenkreis ist ein Schweißinverter angeschlossen. Die Anordnung umfasst zudem einen Hilfsspannungsausgang zur Bereitstellung einer Hilfsspannung.
Die DE 10 2013 014666 A1 offenbart eine Schweißstromquelle, wobei ein Zwischenkreis mit einem Energiespeicher als Pufferelement angeordnet ist. Zur Versorgung kann ein Generator dienen, wobei dessen Leistung aufgrund der Pufferung von Energie im Energiespeicher geringer gewählt sein kann als die bei einem Schweißvorgang benötigte Schweißleistung.
Ein Generator zur Energieversorgung ist beispielsweise gemäß der Offenbarung in DE 199 53 238 A1 als eine mit einem Verbrennungsmotor gekoppelte Asynchronmaschine ausgebildet.

### Zusammenfassung der Erfindung

Der Erfindung liegt die Aufgabe zugrunde, die aus dem Stand der Technik bekannten Energieversorgungssysteme weiterzubilden. Zudem soll ein entsprechendes Verfahren zum Betreiben eines Energieversorgungssystems angegeben werden.

Erfindungsgemäß wird diese Aufgabe gelöst durch ein Energieversorgungssystem gemäß Anspruch 1 und ein Verfahren gemäß Anspruch 9. Vorteilhafte Weiterbildungen sind abhängigen Ansprüchen entnehmbar.

Dabei ist vorgesehen, dass das Energieversorgungssystem ein Inselnetz mit weiteren Verbrauchern umfasst, an das der Generator angeschlossen ist und das mittels eines gesteuerten Stromrichters mit dem Zwischenkreis gekoppelt ist. Auf diese Weise ist ein flexibel einsetzbares Energieversorgungssystem angegeben, mittels dem unabhängig von einem Ladevorgang des Energiespeichers im Bedarfsfall Energie zwischen dem Zwischenkreis und dem Inselnetz ausgetauscht werden kann.

Zusätzlich zur Ladeeinrichtung ist der Stromrichter als weitere Systemkomponente angeordnet, um bei Bedarf Energie aus dem Energiespeicher für Verbraucher im Inselnetz zur Verfügung zu stellen. Falls eine Schweißpause zu kurz ist, um den Akkumulator aufzuladen, schafft der Stromrichter zudem die Möglichkeit, dem Zwischenkreis zusätzliche Energie aus dem Inselnetz zuzuführen. Damit ist das Energieversorgungssystem für unterschiedliche Anwendungsszenarien der Widerstandsschweißmaschine nutzbar.

In einer vorteilhaften Weiterbildung umfasst der Energiespeicher einen Lithium-Ionen-Akkumulator. Dieser Akkumulatortyp weist die erforderliche hohe spezifische Energie auf, um die Energiespitzen während eines Abbrennstumpfschweißvorgangs abzudecken und gegebenenfalls das Inselnetz mittels des Stromrichters zu stützen.

Dabei ist es günstig, wenn der Lithium-Ionen-Akkumulator als Akku-Pack mit einer integrierten Ladeschaltung zur Durchführung eines Batteriemanagements ausgebildet ist. Das erlaubt eine einfache Integration in das Energieversorgungssystem und die Verwendung eines einfachen Ladegeräts.

Eine weitere Verbesserung sieht vor, dass der Energiespeicher einen Kondensator als weiteres Pufferelement umfasst. Dieser kann Energie schneller als der Lithium-Ionen-Akkumulator zu Verfügung stellen. Auf diese Weise ist sichergestellt, dass hohe Stromspitzen nahezu verzögerungsfrei abgedeckt werden können, wodurch das Abbrennstumpfschweißen mit konstanter Qualität durchführbar ist.

Um den Verbrennungsmotors flexibel als Antrieb für weitere Aggregate nutzen zu können ist es vorteilhaft, wenn der Generator generatorisch und motorisch betreibbar ist. Im motorischen Betrieb des Generators unterstütz dieser den Verbrennungsmotor. Ein an den Verbrennungsmotor gekoppeltes Aggregat kann so beispielsweise kurzzeitig mit einem erhöhten Drehmoment beaufschlagt werden. Die Energie zum motorischen Betrieb des Generators wird dabei mittels Stromrichter durch Entladen des Energiespeichers bereitgestellt.

Ein aus Verbrennungsmotor, Generator, zuschaltbaren Aggregaten und etwaigen Kupplungselementen gebildeter Antriebsstrang kann auch gänzlich mittels des Generators angetrieben werden. Das ist nützlich, um sicherheitsrelevante Aggregate auch dann weiter betreiben zu können, wenn der Verbrennungsmotor ausfällt. Beispielsweise besteht die Möglichkeit, kurzzeitig einen Fahrantrieb mittels Generator im motorischen Betrieb aufrecht zu erhalten, um eine Schweißmaschine bei ausgefallenem Verbrennungsmotor aus einem Gefahrenbereich zu bewegen.

Für eine hohe Schweißqualität ist es von Vorteil, wenn der Schweißinverter zur Umformung einer Zwischenkreisspannung in eine Wechselspannung mit einer Frequenz von etwa 1000 Hz eingerichtet ist. Das führt zu einer geringen Baugröße eines nachgeschalteten Schweißtransformators und zu einem Schweißstrom mit sehr geringer Welligkeit.

In einer weiteren vorteilhaften Ausprägung ist vorgesehen, dass mit dem Verbrennungsmotor eine Hydraulikpumpe gekoppelt ist, um Hydraulikkomponenten der Widerstandsschweißmaschine zu versorgen. Beispielsweise erfolgt damit die hydraulische Verschiebung der Aggregatblöcke während eines Schweißvorgangs, wobei aus dem Energiespeicher über den Stromrichter und den Generator im motorischen Betrieb zusätzliche Energie bereitstellbar ist. Das ist insbesondere am Ende eines Schweißvorgangs von Vorteil, wenn beim sogenannten Stauchschlag die größten Kräfte aufgebracht werden müssen.

Ein besonders einfacher Aufbau des Energieversorgungssystems ist gegeben, wenn der Energiespeicher und der Schweißinverter als Einschubmodule eines Schaltschranks ausgebildet sind. Dabei besteht zudem die Möglichkeit, das System bei Bedarf durch zusätzliche Energiespeicher-Einschubmodule zu erweitern.

Das erfindungsgemäße Verfahren zum Betreiben eines oben beschriebenen Energieversorgungssystems sieht vor, dass der Schweißinverter mit elektrischer Energie aus dem Energiespeicher und/oder mittels des Stromrichters aus dem Inselnetz versorgt wird und dass im Bedarfsfall das Inselnetz mit elektrischer Energie aus dem Energiespeicher mittels des Stromrichters gestützt wird. Damit ist ein flexibler Einsatz des Energieversorgungssystems für unterschiedliche Anwendungsfälle angegeben.

In einer Weiterbildung des Verfahrens wird der Generator motorisch betrieben, um die vom Verbrennungsmotor abgebbare Leistung zu steigern. Auf diese Weise wird die im Akkumulator gespeicherte Energie genutzt, um kurzzeitig ein vom Verbrennungsmotor angetriebenes Aggregat mit höherer Leistung als der Maximalleistung des Verbrennungsmotors anzutreiben.

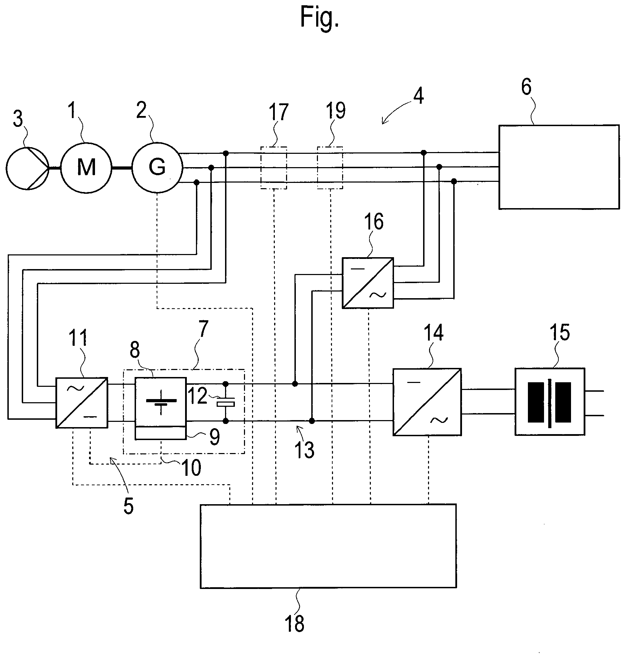

### Kurze Beschreibung der Zeichnung

Die Erfindung wird nachfolgend in beispielhafter Weise unter Bezugnahme auf die beigefügte Figur erläutert. Die Figur zeigt in schematischer Darstellung ein Energieversorgungssystem für eine mobile Widerstandsschweißmaschine zum Abbrennstumpfschweißen von Gleisschienen mit einem Stromrichter zum gesteuerten Energieaustausch zwischen Inselnetz und Zwischenkreis.

### Beschreibung der Ausführungsformen

Mit einem Verbrennungsmotor 1 sind ein Generator 2 und eine Hydraulikpumpe 3 direkt oder über nicht dargestellte Kupplungs-, Freilauf- oder Getriebeelemente verbunden. Als Verbrennungsmotor 1 ist beispielsweise ein Dieselmotor mit etwa 100 kW Motorleistung vorgesehen. Der Generator 2 ist ein Element eines Inselnetzes 4, das beispielsweise als dreipoliges Drehstromnetz ausgelegt ist. Das Inselnetz 4 umfasst neben einer Ladeeinrichtung 5 gegebenenfalls noch weitere Verbraucher 6, zum Beispiel eine Maschinensteuerung, ein Kühlaggregat oder einen Kompressor.

An die Ladeeinrichtung 5 ist ein Energiespeicher 7 angeschlossen. Dieser umfasst günstigerweise einen Lithium-Ionen-Akkumulator 8, der zur einfachen Einbindung in das Energieversorgungssystem als Akku-Pack mit integrierter Ladeschaltung 9 ausgebildet ist. Diese Ladeschaltung 9 umfasst die für Lithium-Ionen-Akkumulatoren 8 notwendige Elektronik und gibt über eine Datenleitung 10 einem gesteuerten Ladegerät 11 die erforderlichen Lade- und Entladeparameter des Lithium-Ionen-Akkumulators 8 vor. Das Ladegerät 11 ist dabei als einfaches Schaltnetzteil ohne eigenes Batteriemanagementsystem ausgeführt.

Günstigerweise umfasst der Energiespeicher 7 auch einen Kondensator 12, der beispielsweise als sogenannter Superkondensator (Supercap) ausgebildet ist. Damit wird ein hoher Energiebedarf mit kurzer Dauer zu Beginn des Abbrennstumpfschweißens abgedeckt.

Der Lithium-Ionen-Akkumulator 8 und der Kondensator 12 sind parallel in einem Zwischenkreis 13 als Pufferelemente angeordnet. An dem Zwischenkreise 13 ist ein Schweißinverter 14 angeschlossen, der eine Zwischenkreisspannung in eine Wechselspannung mit Rechteckform und einer Frequenz von etwa 1000 Hz zerhackt. Dem Schweißinverter 14 ist ein Schweißtransformator 15 zur Umwandlung der Wechselspannung in die für den Schweißvorgang notwendige Ausgangsspannung nachgeordnet. Mit dieser Mittelfrequenztechnik weist ein gleichgerichteter Schweißstrom eine besonders geringe Welligkeit auf.

Dabei kann es günstig sein, mehrere parallel geschaltete Schweißinverter 14 mit jeweils nachgeschaltetem Schweißtransformator 15 vorzusehen. Die einzelnen Geräteeinheiten weisen dann eine geringe Baugröße auf und müssen nur für den jeweiligen Teilstrom ausgelegt sein. Eine Phasenverschiebung der einzelnen Teilströme zueinander reduziert zudem die Welligkeit des resultierenden Schweißstromes.

Das erfindungsgemäße Energieversorgungssystem umfasst einen gesteuerten Stromrichter 16. Ein Gleichstromanschluss des Stromrichters 16 ist mit dem Zwischenkreis 13 und ein Drehstromanschluss des Stromrichters 16 ist mit dem Inselnetz 4 verbunden. Mittels des Stromrichters 16 erfolgt bei Bedarf ein Energieaustausch zwischen Inselnetz 4 und Zwischenkreis 13. Zu diesem Zweck ist der Stromrichter 16 als Frequenzumrichter mit geeigneten Leistungshalbleiterelementen ausgebildet.

Im Inselnetz sind Messeinrichtungen 17 angeordnet, deren Messergebnisse einer gemeinsamen Steuerung 18 zugeführt sind. Beispielsweise umfassen die Messeinrichtungen 17 eine Spannungsmessschaltung, um einen Spannungsabfall im Inselnetz 4 zu detektieren. Dabei wird die Spannung im Inselnetz laufend mit einer Spannungsschwelle verglichen. Sobald die Spannungsschwelle unterschritten wird, steuert die Steuerung 18 den Stromrichter 16 in der Weise an, dass Energie aus dem Energiespeicher 7 ins Inselnetz 4 rückgespeist wird.

Dieser Fall kann beispielsweise auftreten, wenn die vom Verbrennungsmotor angetriebene Hydraulikpumpe 3 und die weiteren Verbraucher 6 mehr Leistung aufnehmen als die maximale Motorleistung. Diese Leistungsdifferenz wird mit der im Energiespeicher 7 gespeicherten Energie abgedeckt. Auf diese Weise ist es möglich, das Inselnetz kurzzeitig in einem Überlastbereich zu betreiben.

Die mittels Stromrichter 16 ins Inselnetz 4 eingespeiste Energie ist auch nutzbar, um über den Generator 2 im motorischen Betrieb den Verbrennungsmotor 1 zu stützen. Somit übersteigt die am Verbrennungsmotor 1 abgebbare Leistung (z.B. 150 kW) die maximale Motorleistung. Angesteuert wird der als Asynchronmaschine ausgebildete Generator dabei mittels der gemeinsamen Steuerung 18.

Beim Abbrennstumpfschweißen von Gleisschienen erfolgt am Ende des Schweißvorgangs der Stauchschlag. Dabei werden die Aggregatblöcke der Schweißmaschine mit hoher Kraft zueinander verschoben. Für diesen Prozessschritt kann die Hydraulikpumpe 3 kurzzeitig einen hohen Hydraulikdruck bereitstellen, indem die am Verbrennungsmotor 1 abgebbare Leistung mittels Generator 2 angehoben wird. Somit muss die Leistung des Verbrennungsmotors 1 nicht für diese Lastspitzen ausgelegt sein. Es reicht aus, wenn der Verbrennungsmotor 1 genügend Leistung aufweist, damit der Energiespeicher während einer Schweißpause ausreichend aufgeladen wird.

Die Aufladung des Energiespeichers 7 erfolgt dabei mittels der Ladeeinrichtung 5. Beim Abbrennstumpfschweißen von Gleisschienen dauert eine Schweißpause erfahrungsgemäß ausreichend lang, um im Energiespeicher 7 genügend Energie für den nächsten Schweißvorgang zu speichern. Dabei ist eine gleichmäßige Belastung des Generators 2 und des Verbrennungsmotors 1 ohne Motordrückung sichergestellt.

Während eines Schweißvorgangs wird die im Energiespeicher 7 gespeicherte Energie dem Schweißinverter 14 zugeführt. Die Ansteuerung des Schweißinverters 14 erfolgt zu diesem Zweck mittels der gemeinsamen Steuerung 18. Eine Elektronik in der Ladeschaltung 9 oder im Ladegerät 11 meldet dabei der Steuerung 18 laufend den Ladezustand des Lithium-Ionen-Akkumulators 8.

Im Regelbetrieb wird der Energiespeicher 7 während einer Schweißpause so weit aufgeladen, dass im Anschluss zumindest ein ganzer Schweißvorgang durchführbar ist. Dabei werden zunächst die Stromspitzen am Beginn des Abbrennstumpfschweißens abgedeckt und beim abschließenden Stauchschlag wird der Verbrennungsmotor 1 mittels des Generators 2 im motorischen Betrieb gestützt.

Reicht hingegen die im Kondensator 12 und im Lithium-Ionen-Akkumulator 8 gespeicherte Energie nicht aus, um einen ganzen Schweißvorgang durchzuführen, wird mittels des Stromrichters 16 Energie aus dem Inselnetz 4 in den Zwischenkreis 13 gespeist. Zu diesem Zweck ist der Stromrichter 16 als bidirektionaler Wechselrichter ausgebildet. Dabei wird gegebenenfalls Energie im Energiespeicher 7 zurückbehalten, um damit den Verbrennungsmotor 1 beim abschließenden Stauchschlag zu stützen.

Für ein Hochfahren des Energieversorgungssystems kann es günstig sein, wenn im Inselnetz 4 Schütze 19 zum anfänglichen Wegschalten von Verbrauchern 6 vorgesehen sind. Die Ansteuerung der Schütze 19 erfolgt dabei in Abhängigkeit einer sich aufbauenden Spannung mittels der gemeinsamen Steuerung 18. Zudem ist darauf zu achten, dass während des Hochfahrens ein Ladestrom des Kondensators 12 begrenzt wird. Das kann durch einen ausreichenden Innenwiderstand oder durch eine aktive Strombegrenzung mittels des als Schaltnetzteil ausgebildeten Ladegeräts 11 geschehen.

Die einzelnen Komponenten des Energieversorgungssystems sind günstigerweise als Einschubmodule eines Schaltschranks ausgebildet. Auf diese Weise ist ein rascher Austausch einer fehlerhaften Komponente sichergestellt. Zudem kann bei Bedarf auf einfache Weise ein Akku-Pack mit geänderter Kapazität zur Anwendung kommen oder das System mit zusätzlichen Komponenten erweitert werden.

Der Aufbau des Energieversorgungssystems als erweitertes Inselnetz erlaubt eine Containerbauweise der Widerstandsschweißmaschine, sodass diese flexibel entweder als Standgerät oder als Aufbau auf diversen Fahrzeugen ausgebildet sein kann.

## Patentansprüche

1. Energieversorgungsystem für eine mobile Widerstandsschweißmaschine zum Abbrennstumpfschweißen von Gleisschienen, welches einen mit einem Generator (2) gekoppelten Verbrennungsmotor (1) sowie eine Ladeeinrichtung (5) zum Aufladen eines Energiespeichers (7) umfasst, wobei der Energiespeicher (7) ein Pufferelement eines Zwischenkreises (13) ist, an den ein Schweißinverter (14) angeschlossen ist, **dadurch gekennzeichnet, dass** das Energieversorgungssystem ein Inselnetz (4) mit weiteren Verbrauchern (6) umfasst, an das der Generator (2) angeschlossen ist und das mittels eines gesteuerten Stromrichters (16) mit dem Zwischenkreis (13) gekoppelt ist.

2. Energieversorgungssystem nach Anspruch 1, **dadurch gekennzeichnet, dass** der Energiespeicher (7) einen Lithium-Ionen-Akkumulator (8) umfasst.

3. Energieversorgungssystem nach Anspruch 2, **dadurch gekennzeichnet, dass** der Lithium-Ionen-Akkumulator (8) als Akku-Pack mit einer integrierten Ladeschaltung (9) ausgebildet ist.

4. Energieversorgungssystem nach einem der Ansprüche 1 bis 3, **dadurch gekennzeichnet, dass** der Energiespeicher (7) einen Kondensator (12) als weiteres Pufferelement umfasst.

5. Energieversorgungssystem nach einem der Ansprüche 1 bis 4, **dadurch gekennzeichnet, dass** der Generator (2) generatorisch und motorisch betreibbar ist.

6. Energieversorgungssystem nach einem der Ansprüche 1 bis 5, **dadurch gekennzeichnet, dass** der Schweißinverter (14) zur Umformung einer Zwischenkreisspannung in eine Wechselspannung mit einer Frequenz von etwa 1000 Hz eingerichtet ist.

7. Energieversorgungssystem nach einem der Ansprüche 1 bis 6, **dadurch gekennzeichnet, dass** mit dem Verbrennungsmotor (1) eine Hydraulikpumpe (3) gekoppelt ist, um Hydraulikkomponenten der Widerstandsschweißmaschine zu versorgen.

8. Energieversorgungssystem nach einem der Ansprüche 1 bis 7, **dadurch gekennzeichnet, dass** der Energiespeicher (7) und der Schweißinverter (14) als Einschubmodule eines Schaltschranks ausgebildet sind.

9. Verfahren zum Betreiben eines Energieversorgungssystems nach einem der Ansprüche 1 bis 8, wobei der Energiespeicher (7) mittels der Ladeeinrichtung (5) aufgeladen wird, **dadurch gekennzeichnet, dass** der Schweißinverter (14) mit elektrischer Energie aus dem Energiespeichers (7) und/oder mittels des Stromrichters (16) aus dem Inselnetz (4) versorgt wird und dass im Bedarfsfall das Inselnetz (4) mit elektrischer Energie aus dem Energiespeicher (7) mittels des Stromrichters (16) gestützt wird.

10. Verfahren nach Anspruch 9, **dadurch gekennzeichnet, dass** der Generator (2) motorisch betrieben wird, um die vom Verbrennungsmotor (1) abgebbare Leistung zu steigern.

## Claims

1. An energy supply system for a mobile resistance welding machine for flash-butt welding of track rails, comprising a combustion engine (1) coupled to a generator (2) as well as a charging device (5) for charging an energy store (7), wherein the energy store (7) is a buffer element of an intermediate circuit (13) to which a welding inverter (14) is connected, **characterized in that** the energy supply system comprises an island grid (4) with further users (6) to which the generator (2) is connected and which is coupled to the intermediate circuit (13) by means of a controlled power converter (16).

2. An energy supply system according to claim 1, **characterized in that** the energy store (7) comprises a lithium-ion accumulator (8).

3. An energy supply system according to claim 2, **characterized in that** the lithium-ion accumulator (8) is designed as an accu-pack having an integrated charging circuit (9).

4. An energy supply system according to one of claims 1 to 3, **characterized in that** the energy store (7) comprises a capacitor (12) as a further buffer element.

5. An energy supply system according to one of claims 1 to 4, **characterized in that** the generator (2) can be operated as a generator and as an engine.

6. An energy supply system according to one of claims 1 to 5, **characterized in that** the welding inverter (14) is configured for converting an intermediate circuit voltage into an AC voltage with a frequency of approximately 1000 Hz.

7. An energy supply system according to one of claims 1 to 6, **characterized in that** a hydraulic pump (3) is coupled to the combustion engine (1) in order to supply hydraulic components of the resistance welding machine.

8. An energy supply system according to one of claims 1 to 7, **characterized in that** the energy store (7) and the welding inverter (14) are designed as plug-in modules of a switch cabinet.

9. A method for operation of an energy supply system according to one of claims 1 to 8, wherein the energy store (7) is charged by means of the charging device (5), **characterized in that** the welding inverter (14) is supplied with electrical energy from the energy store (7) and/or by means of the power converter (16) from the island grid (4), and that, if necessary, the island grid (4) is supported with electrical energy from the energy store (7) by means of the power converter (16).

10. A method according to claim 9, **characterized in that** the generator (2) is operated as an engine in order to increase the power that can be delivered by the combustion engine (1).

## Revendications

1. Système d'alimentation en énergie pour une machine à souder par résistance mobile pour le soudage par étincelage de rails de voie, qui comprend un moteur à combustion (1) couplé à un générateur (2) ainsi qu'un dispositif de charge (5) pour le chargement d'un accumulateur d'énergie (7), dans lequel l'accumulateur d'énergie (7) est un élément tampon d'un circuit intermédiaire (13) auquel un inverseur de soudage (14) est raccordé, **caractérisé en ce que** le système d'alimentation en énergie comprend un réseau autonome (4) avec d'autres récepteurs (6) auquel le générateur (2) est raccordé et qui est couplé au circuit intermédiaire (13) au moyen d'un convertisseur commandé (16).

2. Système d'alimentation en énergie selon la revendication 1, **caractérisé en ce que** l'accumulateur d'énergie (7) comprend un accumulateur lithium-ion (8).

3. Système d'alimentation en énergie selon la revendication 2, **caractérisé en ce que** l'accumulateur lithium-ion (8) est réalisé en tant que bloc d'accumulateurs avec un circuit de charge intégré (9).

4. Système d'alimentation en énergie selon une des revendications 1 à 3, **caractérisé en ce que** l'accumulateur d'énergie (7) comprend un condensateur (12) en tant qu'autre élément tampon.

5. Système d'alimentation en énergie selon une des revendications 1 à 4, **caractérisé en ce que** le générateur (2) peut être exploité de manière génératrice et motrice.

6. Système d'alimentation en énergie selon une des revendications 1 à 5, **caractérisé en ce que** l'inverseur de soudage (14) est configuré pour la conversion d'une tension de circuit intermédiaire en une tension alternative avec une fréquence d'environ 1000 Hz.

7. Système d'alimentation en énergie selon une des revendications 1 à 6, **caractérisé en ce qu'**une pompe hydraulique (3) est couplée au moteur à combustion (1) pour alimenter des composants hydrauliques de la machine à souder par résistance.

8. Système d'alimentation en énergie selon une des revendications 1 à 7, **caractérisé en ce que** l'accumulateur d'énergie (7) et l'inverseur de soudage (14) sont réalisés en tant que modules enfichables d'une armoire de distribution.

9. Procédé d'exploitation d'un système d'alimentation en énergie selon une des revendications 1 à 8, dans lequel l'accumulateur d'énergie (7) est chargé au moyen du dispositif de charge (5), **caractérisé en ce que** l'inverseur de soudage (14) est alimenté en énergie électrique provenant de l'accumulateur d'énergie (7) et/ou au moyen du convertisseur (16) provenant du réseau autonome (4) et qu'en cas de besoin, le réseau autonome (4) est soutenu avec de l'énergie électrique provenant de l'accumulateur d'énergie (7) au moyen du convertisseur (16).

10. Procédé selon la revendication 9, **caractérisé en ce que** le générateur (2) est exploité de manière motrice pour accroître la puissance pouvant être délivrée par le moteur à combustion (1).
